# EUROPEAN PATENT SPECIFICATION

(11) **EP 0 786 674 B1**
(45) Date of publication and mention of the grant of the patent: **22.10.2003**
(21) Application number: 97300345.2
(22) Date of filing: 20.01.1997
(51) Int. Cl.: G01V 11/00, G01V 5/04, G01T 1/17

(54) **Apparatus and method for the suppression of microphonic noise in proportional counters for borehole logging-while-drilling**
Verfahren und Vorrichtung zur Unterdrückung von mikrophonischem Geräusch in Proportional-Zählrohren beim Bohrlochmessen während des Bohrens
Procédé et dispositif pour supprimer le bruit microphonique dans des compteurs proportionnels pour un outil de mesure pendant le forage

(30) Priority: 25.04.1996 US 637567; 25.01.1996 US 11050
(43) Date of publication of application: 30.07.1997
(73) Proprietor: Anadrill International SA, Panama City (PA); SERVICES PETROLIERS SCHLUMBERGER, 75007 Paris (FR)
(72) Inventor: Sloan, W. Robert, Missouri City, Texas 77459 (US); Kurkoski, Philip L., London, WC2B 6XH (GB); Holenka, Jacques M., Missouri City, Texas 77459 (US)
(74) Representative: Hyden, Martin Douglas

(56) References cited:
- US-A- 4 879 463
- US-A- 5 023 450
- US-A- 5 483 061

## Description

### BACKGROUND OF THE INVENTION

### 1. Field of the Invention

This invention relates generally to the use of proportional counters for neutron detection during borehole logging. In particular, this invention relates to an apparatus and method for the suppression of proportional counter microphonic noise produced by high amplitude mechanical shocks inherent in the process of borehole drilling.

### 2. Description of the Related Art

The use of proportional counters for neutron detection in borehole logging-while-drilling is made extremely difficult by high amplitude mechanical shocks inherent in the borehole drilling environment. Typically, such shocks cause mechanical displacements of the components within the proportional counters as well as mechanical displacements of the electronic components attached to the proportional counters. When there are component movements within a proportional counter, modulation of the effective capacitance of the detector in the proportional counter occurs. This modulation, coupled with the high voltage bias applied to the proportional counter, causes a current to flow that produces a signal in the electronic preamplifier of the counter. Such signal is generally referred to as microphonic noise. If the magnitude of the microphonically produced current is significant, the signal in the form of a voltage pulse, produced at the preamplifier's output will exceed the threshold of the voltage pulse discriminator connected to the preamplifier output. This results in microphonic noise being mistakenly counted as a neutron detection event.

In a typical logging-while-drilling neutron measurement, arrays of proportional counters are placed at various distances from the neutron source. The ratios of the count rates from these arrays are related to the properties of the formation surrounding the borehole. The set of counters farthest from the borehole may record only a few tens of counts per second (cps). Because of the low count rates, the counters farthest from the source are particularly susceptible to false neutron counts caused by additive microphonic noise. Just a few extra counts per second in these counters from microphonic noise can significantly bias the determination of geological information computed from counter array ratios.

U.S. Patent 5,023,450 which issued June 11, 1991 describes the problem of microphonic generation of noise in thermal neutron detectors used in measuring-while-drilling (MWD) systems. The '450 patent relating to the environmental forces applied to neutron detectors in a measuring-while-drilling system, describes a circuit for common mode rejection of noise. The '450 patent illustrates two detectors provided in a drill collar to detect neutron count rate. The output of one detector is connected to the positive input of a differential amplifier. The output of the second detector is connected to the negative input of such differential amplifier. Common vibration induced signals of the two detectors are cancelled at the output of the differential amplifier.

The '450 patent disclosure assumes that neutrons returning from the earth formations surrounding the borehole will impinge on the two detectors at different times. Accordingly, the output of the differential amplifier produces a pulse stream representative of neutrons striking the two detectors.

In practice however, noise pulses do contaminate the output stream of the differential amplifier. The '450 patent disclosure provides no means for identifying noise pulses of such output stream and eliminating them from a pulse count in order to further reduce microphonic noise from a measured neutron count rate.

An object of this invention is to provide a method and electronic apparatus for suppressing proportional counter microphonic noise generated during borehole logging-while-drilling operations.

### SUMMARY OF THE INVENTION

The microphonic noise suppression of the method and apparatus of this invention is embodied in equipment which includes a differential amplifier responsive to two He³ neutron detectors spaced at two different radial locations on a logging-while-drilling apparatus. Two voltage pulse discriminating circuits and electronic circuitry are provided to identify and measure the length of pulses from the differential amplifier. The invention suppresses proportional counter microphonic noise in three different ways.

First, certain coherent microphonically generated noise between the two He³ detectors is cancelled through the use of a differential amplifier. Second, a microprocessor and electronic circuits are used to detect and distinguish a neutron detection pulse from microphonic noise based on the expected time length of a neutron pulse by counting pulses only if they have a time length less than a predetermined amount. Third, a secondary level of logic is applied in the microprocessor to not count coincident pulses between sets of pulses originating in each of the two He³ detectors.

### BRIEF DESCRIPTION OF THE DRAWINGS

The objects, advantages and features of the invention will become more apparent by reference to the drawings which are appended hereto and wherein an illustrative embodiment of the invention is shown, of which:
Figure 1 is an illustration of a logging-while-drilling system including a neutron detector apparatus within which the invention is incorporated;
Figure 2 illustrates a neutron detector system of a logging-while-drilling tool within which the invention is incorporated;
Figure 3 is a schematic diagram illustrating a microphonic noise suppression module, according to the invention, for proportional counters used in borehole logging-while-drilling apparatus;
Figure 4 illustrates a computer program of a microprocessor in the noise suppression module which, in cooperation with the electronic circuits of the module, distinguishes noise generated pulses from neutron generated pulses and establishes a count of neutron pulses;
Figure 5 illustrates the effectiveness of using the arrangement of two detectors to one differential amplifier for reducing microphonic noise; and
Figures 6A - 6D illustrate characteristics of a typical neutron detection pulse and a typical pulse which results from microphonic noise.

### DESCRIPTION OF THE PREFERRED EMBODIMENT

The preferred embodiment of the invention described below is in a system like that of a logging-while-drilling system for measuring formation characteristics as a function of angular position within a borehole. Such system is described in U.S. Patent 5,473,158.

Although the preferred application of the invention described below is in a logging-while-drilling system in general, and specifically like that of U.S. Patent 5,473,158, the invention may find application in any neutron detector system, whether a system designed for logging-while-drilling applications or for open hole wireline logging operations.

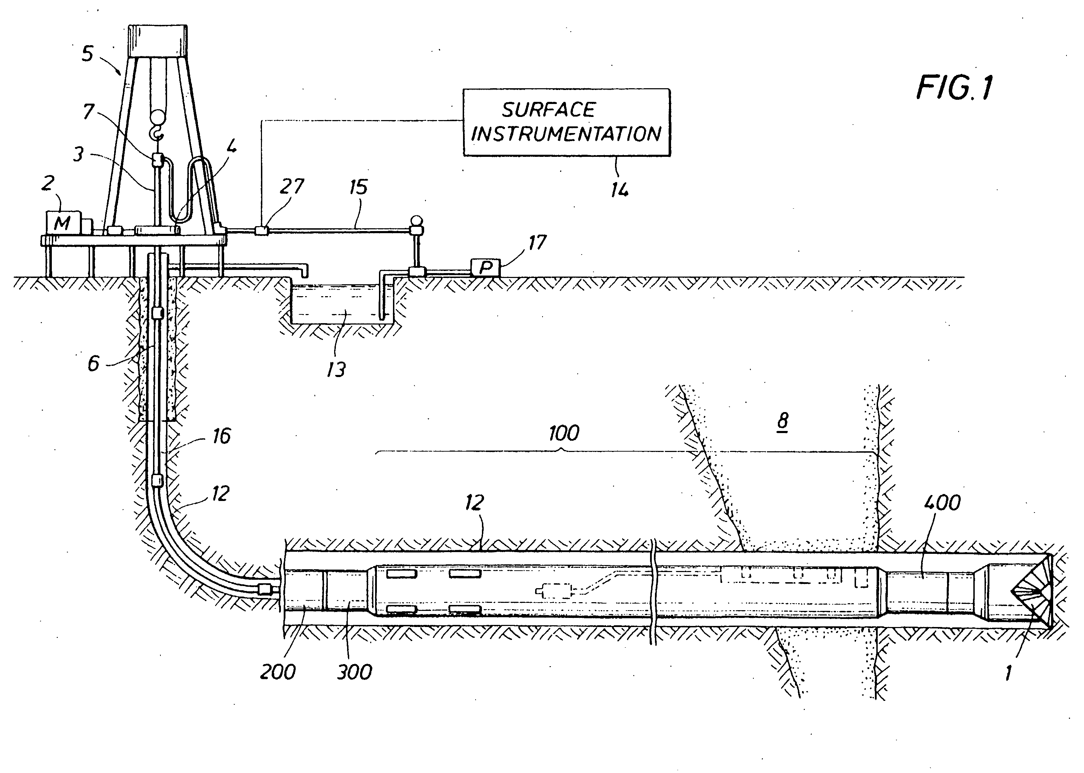

Figure 1 illustrates a preferred embodiment of the invention. A logging-while-drilling (LWD) tool **100** is connected in tandem with a drilling assembly including drill bit **1**. An associated downhole electronics module **300** and measuring-while-drilling (MWD) tool **200** including magnetometers and accelerometers are also connected in tandem with LWD tool **100**. Module **300** may be a separate "sub" or it may be disposed in the body of LWD tool **100**. A communication sub **400** is also provided in the drilling assembly.

The LWD tool **100** is shown for illustration purposes as being in an inclined portion of a borehole at the end of a drill string **6** which turns in a borehole **12** which is formed in formation **8** by penetration of bit **1**. Of course, the drilling assembly may also be in the vertical portion of the borehole. A drilling rig **5** turns drill string **6**. Drilling rig **5** includes a motor **2** which turns a kelly **3** by means of a rotary table **4**. The drill string **6** includes sections of drill pipe connected end-to-end to the kelly **3** and turned thereby. The MWD tool **200,** electronics module **300,** the LWD tool **100** and communication sub **400** are all connected in tandem with drill string **6**. Such subs and tools form a bottom hole drilling assembly between the drill string **6** of drill pipe and the drill bit **1**.

As the drill string **6** and the bottom hole assembly turn, the drill bit **1** penetrates the borehole **12** through earth formations **8**. Drilling fluid or "mud" is forced by pump **17** from mud pit **13** via stand pipe **15** and revolving injector head **7** through the hollow center of kelly **3** and drill string **6,** and the bottom hole drilling assembly to the bit **1**. Such mud acts to lubricate drill bit **1** and to carry borehole cuttings or chips upwardly to the surface via annulus **16**. The mud is returned to mud pit **13** where it is separated from borehole cuttings and the like, degassed, and returned for application again to the drill string **6.**

The communication sub **400** receives output signals from sensors of the LWD tool **100** and from computers in the downhole electronics module **300** and MWD tool **200**. Such communication sub **400** is designed to transmit coded acoustic signals representative of such output signals to the surface through the mud path in the drill string **6** and downhole drilling assembly. Such acoustic signals are sensed by transducer **27** in standpipe **15,** where such acoustic signals are detected in surface instrumentation **14**. The communication sub **400**, including the surface instrumentation necessary to communicate with it, are arranged as the downhole and surface apparatus disclosed in U.S. Patent 4,479,564 arid U.S. Patent 4,637,479.

The communication sub **400** may advantageously include the communication apparatus disclosed in U.S. Patent 5,237,540. Such patent is assigned to the assignee of this application.

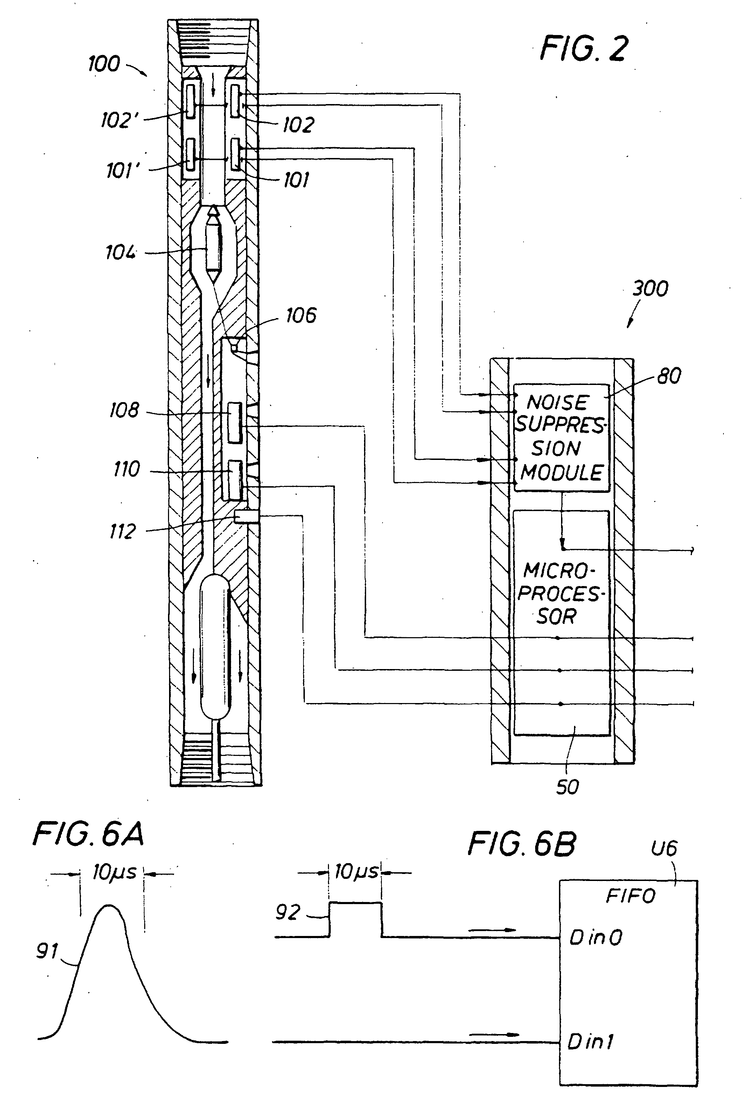

Figure 2 illustrates the LWD tool **100** of Figure 1 in a schematic way. The physical structure of the LWD tool body and associated sensors is substantially like that described in U.S. Patent 4,879,463, and U.S. Patent 5,017,778. Both of such patents are assigned to the assignee of the invention described herein. These patents describe a logging-while-drilling tool, specifically a compensated density neutron tool used in logging-while-drilling measurements of formation characteristics. Stabilizer blades maybe provided as an alternative embodiment of the LWD tool **100**, where a stabilized tool is required.

The LWD tool **100** includes a source of neutrons **104** disposed axially, and near and far spaced neutron detector arrays. Such arrays include at least two near spaced detectors, **101, 101'** and at least two far spaced detectors, **102, 102'**. Such detectors are spaced radially from each other. The LWD tool **100** also includes a source of gamma rays **106** and short and long spaced gamma ray detector assemblies **108, 110**. The preferred LWD tool **100** also includes an ultrasonic transducer **112** for measuring tool standoff from the borehole wall. Such ultrasonic transducer and system is described in U.S. Patent Re 34,975 to Orban, et al. which is assigned to the assignee of the invention described herein. In this patent an ultrasonic transducer **112** of the LWD tool **100** is described. The electronics module **300,** at the option of the designer, may either be part of MWD tool **200** or an independent sub. In the preferred system as described above, it includes a magnetometer section, but more importantly to the invention described herein, it includes a noise suppression module **80** for accepting signals from neutron detectors **101, 101', 102, 102'** and generating at its output, neutron count rate signals at a respective "near" location and a "far" location spaced from neutron source **104**. Module **80** includes a separate channel for processing signals from "far" detectors **102, 102',** but for simplicity of illustration and description only, the channel for processing detectors at the near location is described here. Processed neutron count rate signals from noise suppression module **80** are combined in a microprocessor **50** with other signals from magnetometers, accelerometers and ultrasonic detectors to generate borehole characteristics such as density and lithology, as a function of angular distance about the borehole and as a function of depth in the borehole. The signals received in microprocessor **50** are then applied to computer programs stored in memory. Such programs need not be described here but are described in detail in the above mentioned U.S. Patent 5,473,158.

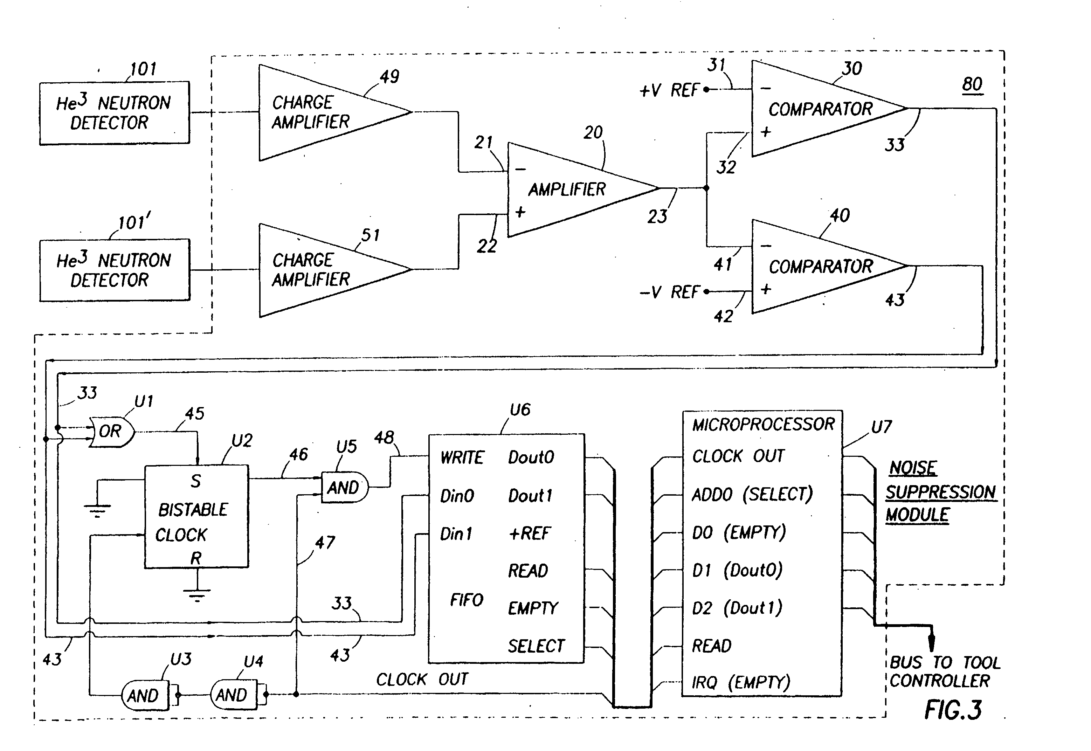

Turning now to Figure 3, two He³ neutron detectors **101, 101'** are connected via charge amplifiers **49, 51** to differential amplifier **20**. The output of detector **101** and charge amplifier **49** is applied to the inverting input **21** while the output of detector **101'** and charge amplifier **51** is applied to the non-inverting input **22**. The differential amplifier output on lead **23** is connected to a pair of voltage pulse discriminators **30, 40** via inputs **32** and **41** respectively. Such voltage pulse discriminators are preferably comparators. Discriminator or comparator **30** serves to screen out any positive voltage pulse with a positive voltage magnitude less negative than that of the positive reference voltage connected to input **31**. Similarly, discriminator or comparator **40** screens out any negative voltage pulse with a negative voltage magnitude less negative than that of the negative reference voltage connected to input **42**. The output leads **33, 43** of discriminators **30, 40** are respectively connected to digital input ports of first-in-first-out buffer (FIFO) **U6** and OR gate **U1**.

The output of OR gate **U1** is applied via lead **45** to the "set" input of bistable circuit **U2.** When either of the discriminators outputs are logic true, bistable circuit **U2** will set and produce an enable pulse via lead **46** to one input of the two inputs of AND gate **U5**. The other input to AND gate **U5** is a continuous 3.33 microsecond period clock signal via lead **47** generated by microprocessor **U7**. The bistable **U2** set data via lead **46** causes Din0 and Din1 of FIFO **U6** to be written into the FIFO on each clock cycle. Data continues to be clocked into FIFO **U6** as long as any discriminator output on either lead **33** or lead **43** is logically true. Because the period of the clock is 3.33 microseconds and valid neutron pulses are in the 10 microsecond range, one to three logical ones ("1") are clocked into the FIFO **U6** for valid neutron pulses. If any discriminator output is true for a longer time, more 1s are clocked into the FIFO. When all discriminator outputs return to the logic 0 state, bistable circuit **U2** resets on the next clock cycle and removes the enabling signal via lead 46 to AND gate **U5**. A slight delay occurs in resetting bistable circuit **U2** caused by delay times through gates **U3** and **U4**. This delayed resetting of **U2** allows one additional data word of all zeros to be clocked into FIFO **U6**. Such all zero data word is a termination signature for each detector pulse and prevents "run ons" by any subsequent detector pulses. Because each detector output is connected via leads **33, 43** to a unique input Din0 or Din1 of the FIFO **U6,** when the FIFO **U6** output is read by the microprocessor **U7,** each bit position is associated with a unique detector's output, and the number of sequential ones ("1") recorded in any bit position is a measure of a detector's pulse width.

The FIFO **U6** serves an additional function to synchronize the microprocessor **U7** processing speed with the detector data sampling clock. With the FIFO **U6** in the circuit, detector data can stack up in the FIFO **U6** without loss while the microprocessor **U7** is processing a data word. A typical commercial version FIFO circuit **U6** can produce words of 9 bits wide stacked 1024 words deep. Therefore, up to nine detectors can be connected to a single FIFO, although only two are illustrated in Figure 3. Many detector events can be stacked in the FIFO before data is lost. While the arrival of the detector pulses is random, the event rate for LWD logging is low, resulting in an exceedingly small probability of data loss.

The microprocessor **U7** detects a data word being written into the FIFO **U6** by means of its IRQ input. This IRQ input of microprocessor **U7** is connected to the Empty flag output of FIFO **U6**. When the first data word is written into the FIFO **U6,** the Empty flag goes low and generates a hardware interrupt in the microprocessor **U7**. This interrupt initiates the software task to measure the detector pulse duration in time and to detect multiple pulse coincident time. The microprocessor **U7** can detect when all the data has been read from the FIFO **U6** by checking the D0 bit when it reads data from the FIFO. This bit is also connected to the FIFO Empty flag and is tested on each read of the FIFO **U6**.

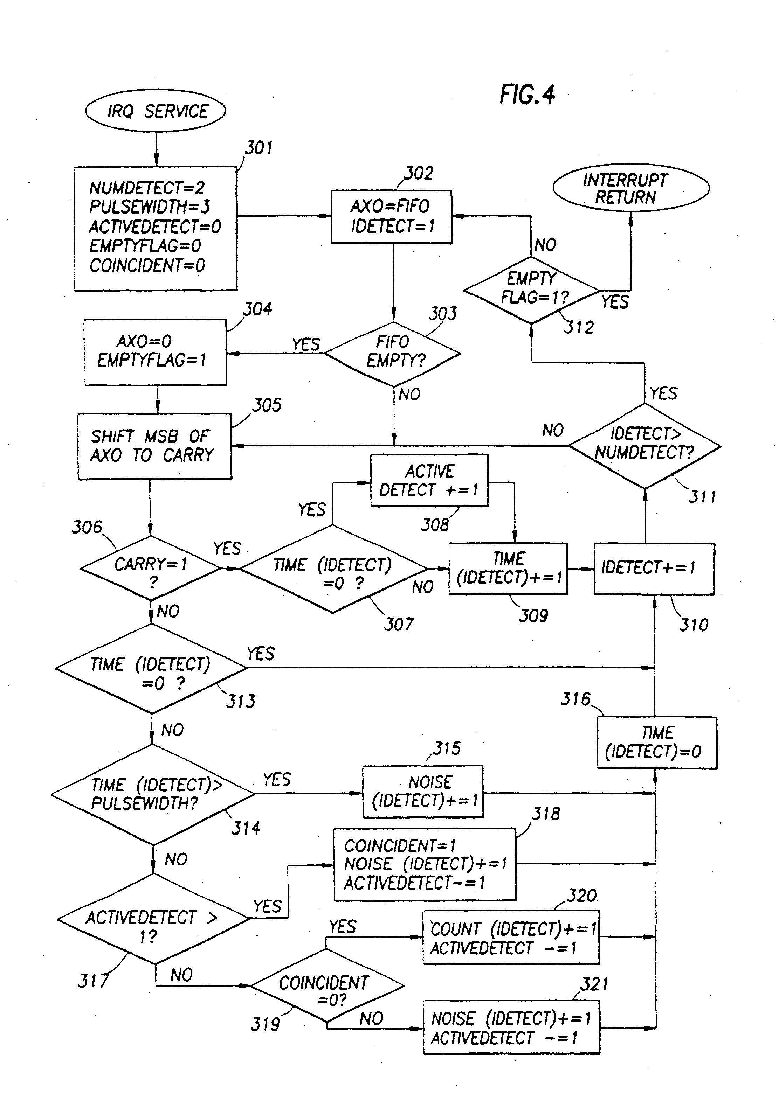

Figure 4 is a flow chart of the software internal to the microprocessor **U7** that is activated by the interrupt generated at its IRQ input when the Empty flag of FIFO **U6** goes low. The role of the software is to read the FIFO and process each detector bit. Each detector bit is tested to determine if it is a 1. If it is a 1, the time counts for that detector are incremented. The incrementing continues until a 1 to 0 transition occurs. At this point the time counts accumulated are tested to determine if the value is less than or equal to the expected value for a valid neutron pulse. If this is the case, a neutron count is indicated. If the time counts are valid, a test for coincidence is made. If coincidence occurs, i.e. more than one detector is active, then a valid neutron count is not recorded. The software continues to read the FIFO **U6** until its Empty flag goes high.

To illustrate the logic flow of the software of the flow chart of Figure 4, four examples using two detectors are presented. Such examples include (1) a single valid detector pulse, (2) a single invalid detector pulse, (3) two valid non-coincident detector pulses, and (4) two coincident pulses. In the table that follows, the first binary word in each column is the first word read out of the FIFO **U6** by the microprocessor **U7.** The data in the FIFO **U6** are augmented by the FIFO Empty flag in the right most bit position. The second column entry is the second binary word read and so on. The middle bit of each word corresponds to detector **101'** and the left bit to detector **101**. In the examples given, only two detectors are used to illustrate the principles of the software. However, the software is not restricted to only two detectors and can be easily extended to additional detectors and FIFOs.

**TABLE 1**

| EXAMPLES OF DETECTOR OUTPUTS | | | | |
|---|---|---|---|---|
| 1 | 2 | 3 | 4 | |
| One Valid Pulse | One Invalid Pulse | Two Valid Pulses | Coincident Pulses | Time Read Interval |
| 010 | 010 | 010 | 010 | 1 |
| 010 | 010 | 010 | 010 | 2 |
| 010 | 010 | 010 | 110 | 3 |
| 000 | 010 | 000 | 100 | 4 |
| 001 | 010 | 100 | 100 | 5 |
| | 000 | 100 | 000 | 6 |
| | 001 | 000 | 001 | 7 |
| | | 001 | | 8 |

### Example 1: One Valid Pulse

Table 1 (column 1) illustrates the word stream applied from FIFO **U6** to microprocessor **U7**. The interrupt generated by a word being written into the FIFO causes execution of logic block **301** in the flow diagram of Figure 4. Logic block **301** sets parameters for the logic flow of the method. A first time interval read of the FIFO is made in logic block **302**. The FIFO empty status, bit 0, is tested in logic block **303**. Since the FIFO is not empty (e.g.,the right most bit of the FIFO word is zero, the FIFO empty output is low) logic passes to logic block **305**. In logic blocks **305, 306** a test of the left most bit is made and a zero is detected. Thus the "carry" bit is not 1 and logic flow passes to logic block **313**. Since no time counts have been accumulated for this detector bit, Time (1) is zero and logic blocks **310, 311, 305** are executed.

When the software enters logic block **305,** the 1 in bit position 1 (e.g., the middle bit of the word **010)** is shifted to the carry bit position and logic block **306** tests true. In logic block **307** Time(2)=0 since this is the first time this detector bit has been detected. From logic block **307,** execution progresses to logic block **308** setting the ActiveDetect detector counter to 1. Time(2) is incremented in logic block **309**. Execution then progresses through logic blocks **310, 311, 312** and **302**. In block **302** another word is read from the FIFO and the detector index counter is reset to 1.

The execution path for the 0 in bit position 2 (e.g., the left most bit of the word **010**) again is the loop formed by logic blocks **305, 306, 313, 310, 311, 305**. For the 1 in bit position 1, the loop includes logic blocks **305, 306, 307, 309, 310, 311, 312, 302, 303, 305**. These two loops are repeated for the third read interval of the FIFO **U6**.

On the fourth read interval of the FIFO, all the bits are zero. Bit 2 processing is again the **305, 306, 313, 310, 311, 305** logic block loop. The loop for bit 1 changes at logic block **306** with a branch to logic block **313** and continues to logic block **314**. In logic block **314** a test is made to determine if the time recorded in Time(2) exceeds the valid pulse width. In this example Time(2)=3, not greater than 3, and the software executes logic block **317**. Only one detector has been active during this pulse time, and the software executes the logic block path **319, 320, 316, 310, 311, 312, 302**. In logic block **320** Count(2) is incremented recording a valid count for detector **101'**.

On the fifth time read interval of the FIFO **U6,** the FIFO empty bit is a "1" in the right most position of the word. This causes execution of logic block **304,** setting all detector bits to zero and the EmptyFlag to a 1. The zero bit processing loop of logic blocks **305, 306, 313, 310, 311, 305** is repeated for both detector bits in order to clear all the internal counters and flags.

### Example 2: One Invalid Pulse

Table 1 (column 2) illustrates the word stream applied from FIFO **U6** to microprocessor **U7** which proceeds along exactly the same logic paths as Example 1 except that the loops are repeated two more times in read intervals 4 and 5. When the test for pulse width is made in logic block **314,** Time(2) is a 5, thus greater than 3. In this case logic block **315** is executed, thereby incrementing the noise counter for detector **101'**. A valid neutron count of logic block **320** is not advanced. The termination logic of the previous example is then repeated after the next FIFO read.

### Example 3: Two Valid Pulses

Table 1 (column 3) illustrates the word stream applied from FIFO **U6** to microprocessor **U7** where a three interval pulse first appears on detector **101'** and then on detector **101**. This example starts identically as the two proceeding examples. On the fourth read of the FIFO detector the pulse of detector **101'** makes the transition from a 1 to a 0 thereby terminating the timing of detector **101'** as in the first example. When detector **101'** is recorded in logic block **320,** the counter ActiveDetect is simultaneously decremented from 1 to zero. On the fifth FIFO read the detector **101** bit becomes a 1 and time counts are accumulated in Time(1) until the seventh time read interval. In this example Time(1) will be 2 when the bit of detector **101** makes the transition from 1 to 0 and is recorded as a valid Count(1) count. On the next read, all the detector bits are zero and the empty FIFO bit is set. The routine is terminated as described above for the One Valid Pulse example of column 1 of Table 1.

### Example 4: Coincident Pulses

Table 1 (column 4) illustrates an example word stream from FIFO **U6** where two valid pulses overlap in time. This example starts out along the same logic path as the One Valid Pulse example. However, on the third time interval read of the FIFO, the 1 bit of detector **101** becomes active and accumulation of time counts in Time(1) begins in logic block **309**. The path in reaching logic block **309** the first time includes logic block **308** which increments ActiveDetect from a 1 to a 2. This indicates that two detectors are active at the same time. On the fourth time interval read of the FIFO the bit of detector **101'** goes to a zero thereby terminating the accumulation of time counts in Time(2). The check of pulse width of detector **101'**, Time(2)=3, in logic block **314** passes execution to logic block **318** via logic block **317** since ActiveDetect=2. In logic block **318** the noise counter of detector **101'** is incremented, ActiveDetect is decremented, and the Coincident flag is set to 1.

In the fifth FIFO time interval read, time counts start accumulating in Time(1). On the sixth FIFO time interval read, the 1 to 0 transition of the bit of detector **101** causes the software to take the logic path **313, 314, 317, 319, 320**. At logic block **319** the branch to logic block **321** is taken and the detector event is recorded as a noise pulse. The setting of the Coincident flag in logic block **318** when the bit of detector **101'** made the 1 to 0 transition causes this branching to logic block **319**.

As indicated in Figures 2 and 3, the count of valid pulses as accumulated in logic block **320** are accumulated as a function of time and passed to microprocessor **50** as a neutron count rate of neutrons striking detectors **101, 101'** for example. More He³ detectors may be used in the near detector array and the far neutron detector array.

As described above the method and apparatus of noise suppression module **80** suppresses microphonic noise on He³ detectors in three ways. First, by connecting the outputs of two detectors **101, 101'** to differential inputs of a single amplifier **20,** a significant amount of coherent microphonically generated noise between the two detectors will be cancelled due to its coherence. Undoubtedly, this configuration may also reject coincident neutron pulses of exactly the same width in addition to the coherent microphonic noise. However, the statistical probability of randomly occurring pulses being exactly coincident between detectors is extremely low when the count rate is only a few tens of cps for each detector; therefore, such concern is minimal. On the other hand, it is very likely that the detectors subjected to the same shock will all exhibit coherent microphonic outputs.

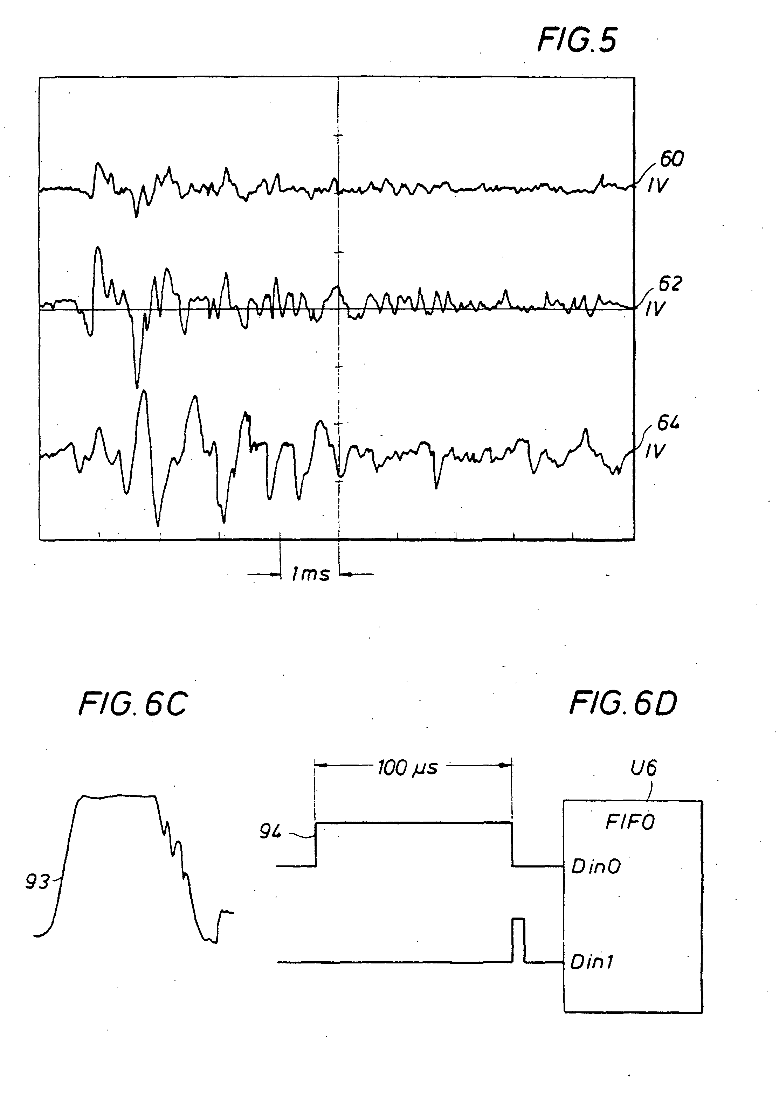

Figure 5 illustrates the effectiveness of connecting two detectors to one amplifier configuration. Three traces **60, 62, 64** are shown in Figure 5. For each of these traces, the detectors are subjected to shocks in excess of 300 G. Traces **62, 64** are from the outputs of one detector connected to one inverting input of an amplifier with the respective non-inverting input being connected to ground (one detector to one amplifier configuration). Trace **60** is from the output of the two detectors to one differential amplifier configuration as described in connection with Figure 3. As may be observed by comparison of the traces, a dramatic reduction of coherent microphonic noise results from using the two detectors to one amplifier configuration. Another benefit of the arrangement of two detectors differentially connected to one amplifier is the reduction of power consumption from using one amplifier instead of two. Such power consumption reduction is an essential consideration for battery operated Such power consumption reduction is an essential consideration for battery operated downhole tools.

Microphonic noise is suppressed in a second way by noise suppression module **80** by using digital circuit logic with a FIFO circuit **U6** polled by microprocessor **U7** with software as illustrated in Figure 4, for detecting and distinguishing a neutron detection pulse from microphonic noise as described above. The software of microprocessor **U7** is interrupt driven from the digital output of FIFO **U6** to determine if one of the discriminators **30, 40** are in the "tripped" or "1" state, indicating the presence of either a neutron pulse or microphonic noise. If a discriminator is tripped by a pulse **91** (see Figure 6A) originating from the detection of a neutron, a "neutron pulse" will exist for approximately 3-10 microseconds. The pulse **92** of Figure 6B, illustrates such a pulse which is applied to input Din0, for example, of FIFO circuit **U6**. But if the tripped state is a noise pulse **93** (see Figure 6C) caused by microphonic noise, such "noise pulse" can last for hundreds of microseconds. The pulse **94** of Figure 6D illustrates a pulse which is applied to the Din0 input of FIFO circuit **U6** which is recorded as a noise pulse. Such order of magnitude increase in time for the microphonic noise is due to its origin in mechanical vibrations having typical frequencies in the low kilohertz range. The large time difference between the two tripped states is identified by the software of Figure 4 of microprocessor **U7** so as to distinguish a neutron pulse from a noise pulse. Hence, microprocessor **U7** correctly counts the neutron pulses when it responds to an interrupt pulse from FIFO circuit **U6** while eliminating counts attributed to microphonic events from the neutron counts.

While normally the length of time for which a discriminator is in the tripped state allows the differentiation between detected neutrons and detected microphonic noise as described above, there is a case which may still be ambiguous. If a noise pulse has an amplitude that exceeds the discriminator level by only a small amount, then the discriminator **30, 40** of Figure 3 may be tripped only for a short period of time, similar in time to that of a neutron pulse. Therefore, in the third way of eliminating a noise pulse from the neutron count, a secondary level logic is applied by the software of Figure 4 in microprocessor **U7** to distinguish these events. When multiple sets of pulses are applied to microprocessor **U7,** coincidence pulses between sets are rejected. Such use of time coincidence for rejecting pulses between or among discriminators **30, 40** is also based on the extremely low statistical probability of randomly occurring pulses being coincident between multiple sets of detectors compared with the much higher statistical probability that multiple detectors subjected to the same shock will exhibit microphonic outputs that will be coincident in time.

Various modifications and alterations in the described methods and apparatus will be apparent to those skilled in the art of the foregoing description which do not depart from the invention as claimed. For this reason, such changes are desired to be included within the scope of the appended claims. The appended claims recite the only limitations to the present invention. The descriptive manner which is employed for setting forth the embodiments should be interpreted as illustrative but not limitative.

## Claims

1. A neutron counting arrangement for a neutron detection assembly in a logging-while-drilling tool comprising at least one neutron detector which produces pulses in response to radiation returning to said tool from formations surrounding a borehole, wherein said pulses are contaminated by microphonic noise, wherein the arrangement further comprises:
means for measuring the time length of an output pulse from said neutron detector; and
means for counting said output pulse as a neutron induced pulse only if said time length of said output pulse is less than a predetermined time length.

2. The arrangement of claim 1, wherein said means for measuring includes means responsive to said output pulse from said neutron detector for generating a measurement pulse if the amplitude of said pulse from said neutron detector is greater than or equal to a predetermined level, and means for measuring the time length of said measurement pulse; and wherein said means for counting includes means for comparing the time length of said measurement pulse with said predetermined time length.

3. The arrangement of claim 1 or claim 2, wherein said predetermined time length is set to a value less than about 10 microseconds.

4. A neutron counting arrangement for a neutron detection assembly in a logging-while-drilling tool having at least two neutron detectors at a common axial position of said tool which produce pulses in response to radiation returning to said tool from formations surrounding a borehole, such tool being subjected to forces which produce microphonic noise pulses from said neutron detectors, and wherein the outputs of said at least two neutron detectors are connected to respective negative and positive inputs of a differential amplifier, wherein the arrangement further comprises:
first and second comparator means connected to the output of said differential amplifier for producing first and second output pulses responsive to pulses applied to said negative and positive inputs of said differential amplifier which are respectively greater than or more negative than predetermined amplitude levels;
means responsive to said first and second output pulses for measuring the time lengths of said first and second output pulses; and
means for counting said respective first and second output pulses as neutron counts only if their respective time lengths are less than a predetermined time length.

5. The arrangement of claim 4, wherein said predetermined time length is set to a value less than about 10 microseconds.

6. The arrangement of claim 4 or claim 5, further comprising means for rejecting both first and second output pulses as neutron counts if said respective first and second output pulses overlap in time.

7. A method for eliminating shock induced pulses from a sequence of radiation induced pulses in the count of pulses from a neutron detector, the method comprising the steps of:
measuring the time length of output pulses from said neutron detector; and
counting said output pulses as neutron induced pulses only if said length of an output pulse is less than a predetermined time length.

8. The method of claim 7, further comprising the step of modifying a raw signal from said neutron detector to produce an output pulse only if said raw signal is greater in amplitude than a predetermined level.

9. A method for eliminating shock induced pulses from a sequence of radiation induced pulses while counting pulses from a neutron detector, the method comprising the steps of:
providing a neutron detector assembly in a logging-while-drilling tool including at least two neutron detectors at a common axial position of said tool with each detector producing pulses in response to radiation returning to said tool from formations surrounding a borehole, said tool being subject to forces which produce microphonic noise pulses in the output of said neutron detectors;
applying the outputs of said at least two neutron detectors to respective negative and positive inputs of a differential amplifier;
providing first and second comparator means connected to the output of said differential amplifier for producing first and second output pulses responsive to pulses applied to said negative and positive inputs of said differential amplifier which are respectively greater than or more negative than predetermined amplitude levels;
measuring the time lengths of said first and second output pulses, and
counting said respective first and second output pulses as neutron counts only if their respective time lengths are less than a predetermined time length.

10. The method of claim 9, further comprising the step of rejecting both first and second output pulses as neutron counts if the respective first and second output pulses overlap in time.

## Patentansprüche

1. Neutronenzählanordnung für eine Neutronenerfassungsbaueinheit in einem Werkzeug zur Bohrlochuntersuchung während des Bohrens, mit wenigstens einem Neutronendetektor, der als Antwort auf Strahlung, die von ein Bohrloch umgebenden Formationen zum Werkzeug zurückkehrt, Impulse erzeugt, wobei die Impulse durch Mikrophonrauschen verunreinigt sind, wobei die Anordnung ferner umfaßt:
Mittel zum Messen der zeitlichen Länge eines Ausgangsimpulses vom Neutronendetektor; und
Mittel zum Zählen des Ausgangsimpulses als einen neutroneninduzierten Impuls nur dann, wenn die zeitliche Länge des Ausgangsimpulses kleiner als eine vorgegebene zeitliche Länge ist.

2. Anordnung nach Anspruch 1, bei der die Meßmittel Mittel, die als Antwort auf den Ausgangsimpuls vom Neutronendetektor einen Meßimpuls erzeugen, falls die Amplitude des Impulses vom Neutronendetektor größer oder gleich einem vorgegebenen Pegel ist, sowie Mittel, die die zeitliche Länge des Meßimpulses messen, umfassen; und bei der die Zählmittel Mittel zum Vergleichen der zeitlichen Länge des Meßimpulses mit der vorgegebenen zeitlichen Länge umfassen.

3. Anordnung nach Anspruch 1 oder 2, bei der die vorgegebene zeitliche Länge auf einen Wert gesetzt ist, der kleiner als etwa 10 Mikrosekunden ist.

4. Neutronenzählanordnung für eine Neutronenerfassungsbaueinheit in einem Werkzeug zur Bohrlochuntersuchung während des Bohrens, die wenigstens zwei Neutronendetektoren an einer gemeinsamen axialen Position des Werkzeugs umfaßt, die als Antwort auf Strahlung, die von ein Bohrloch umgebenden Formationen zum Werkzeug zurückkehrt, Impulse erzeugen, wobei dieses Werkzeug Kräften unterliegt, die Mikrophonrauschimpulse von den Neutronendetektoren erzeugen, und wobei die Ausgänge der wenigstens zwei Neutronendetektoren mit negativen bzw. positiven Eingängen eines Differenzverstärkers verbunden sind, wobei die Anordnung ferner umfaßt:
erste und zweite Komparatormittel, die mit dem Ausgang des Differenzverstärkers verbunden sind, um als Antwort auf Impulse, die an die negativen bzw. positiven Eingänge des Differenzverstärkers angelegt werden und größer bzw. negativer als vorgegebene Amplitudenpegel sind, erste und zweite Ausgangsimpulse erzeugen;
Mittel, die als Antwort auf die ersten und zweiten Ausgangsimpulse die zeitlichen Längen der ersten bzw. zweiten Ausgangsimpulse messen; und
Mittel, die erste bzw. zweite Ausgangsimpulse als Neutronenzählwerte nur dann zählen, wenn ihre jeweiligen zeitlichen Längen kleiner als eine vorgegebene zeitliche Länge sind.

5. Anordnung nach Anspruch 4, bei der die vorgegebene zeitliche Länge auf einen Wert gesetzt ist, der kleiner als etwa 10 Mikrosekunden ist.

6. Anordnung nach Anspruch 4 oder Anspruch 5, die ferner Mittel umfaßt, die sowohl die ersten als auch die zweiten Ausgangsimpulse als Neutronenzählwerte zurückweisen, falls die entsprechenden ersten und zweiten Ausgangsimpulse zeitlich überlappen.

7. Verfahren zum Beseitigen von stoßinduzierten Impulsen aus einer Folge strahlungsinduzierter Impulse beim Zählen von Impulsen von einem Neutronendetektor, wobei das Verfahren die folgenden Schritte umfaßt:
Messen der zeitlichen Länge von Ausgangsimpulsen vom Neutronendetektor; und
Zählen der Ausgangsimpulse als neutroneninduzierte Impulse nur dann, wenn die Länge eines Ausgangsimpulses kleiner als eine vorgegebene zeitliche Länge ist.

8. Verfahren nach Anspruch 7, das ferner den folgenden Schritt umfaßt:
Modifizierens eines Rohsignals vom Neutronendetektor für die Erzeugung eines Ausgangsimpulses nur dann, wenn die Amplitude des Rohsignals größer als ein vorgegebener Pegel ist.

9. Verfahren zum Beseitigen von stoßinduzierten Impulsen aus einer Folge von strahlungsinduzierten Impulsen, wenn Impulse von einem Neutronendetektor gezählt werden, wobei das Verfahren die folgenden Schritte umfaßt:
Vorsehen einer Neutronendetektorbaueinheit in einem Werkzeug zur Bohrlochmessung während des Bohrens, die wenigsten zwei Neutronendetektoren an einer gemeinsamen axialen Position des Werkzeugs aufweist, wobei jeder Detektor als Antwort auf Strahlung, die von ein Bohrloch umgebenden Formationen zum Werkzeug zurückkehrt, Impulse erzeugt, wobei das Werkzeug Kräften unterliegt, die in den Ausgangssignalen der Neutronendetektoren Mikrophonrauschimpulse erzeugen;
Anlegen der Ausgangssignale der wenigstens zwei Neutronendetektoren an negative bzw. positive Eingänge eines Differenzverstärkers;
Vorsehen erster und zweiter Komparatormittel, die mit dem Ausgang des Differenzverstärkers verbunden sind, um als Antwort auf Impulse, die an die negativen bzw. positiven Eingänge des Differenzverstärkers angelegt werden und größer bzw. negativer als vorgegebene Amplitudenpegel sind, erste bzw. zweite Ausgangsimpulse zu erzeugen;
Messen der zeitlichen Längen der ersten und zweiten Ausgangsimpulse und
Zählen der ersten bzw. zweiten Ausgangsimpulse als jeweilige Neutronenzählwerte nur dann, wenn ihre jeweiligen zeitlichen Längen kleiner als eine vorgegebene zeitliche Länge sind.

10. Verfahren nach Anspruch 9, das ferner den Schritt des Zurückweisens sowohl der ersten als auch der zweiten Ausgangsimpulse als Neutronenzählwerte, falls die entsprechenden ersten und zweiten Ausgangsimpulse zeitlich überlappen, umfaßt.

## Revendications

1. Agencement de comptage de neutrons pour un ensemble de détection de neutrons dans un outil de diagraphie pendant un forage comportant au moins un détecteur de neutrons qui produit des impulsions en réponse à un rayonnement revenant vers ledit outil à partir de formations entourant un trou de sondage, dans lequel lesdites impulsions sont contaminées par un bruit microphonique, l'agencement comportant de plus :
des moyens pour mesurer la durée d'une impulsion de sortie provenant dudit détecteur de neutrons, et
des moyens pour compter ladite impulsion de sortie sous forme d'une impulsion induite par neutrons uniquement si ladite durée de ladite impulsion de sortie est inférieure à une durée prédéterminée.

2. Agencement selon la revendication 1, dans lequel lesdits moyens de mesure comportent des moyens sensibles à ladite impulsion de sortie provenant dudit détecteur de neutrons pour générer une impulsion de mesure si l'amplitude de ladite impulsion provenant dudit détecteur de neutrons est supérieure ou égale à un niveau prédéterminé, et des moyens pour mesurer la durée de ladite impulsion de mesure, et dans lequel lesdits moyens de comptage comportent des moyens pour comparer la durée de ladite impulsion de mesure et ladite durée prédéterminée.

3. Agencement selon la revendication 1 ou 2, dans lequel ladite durée prédéterminée est établie à une valeur inférieure à environ 10 microsecondes.

4. Agencement de comptage de neutrons pour un ensemble de détection de neutrons dans un outil de diagraphie pendant un forage ayant au moins deux détecteurs de neutrons au niveau d'une position axiale commune dudit outil qui produisent des impulsions en réponse à un rayonnement revenant vers ledit outil à partir de formations entourant un trou de sondage, cet outil étant soumis à des forces qui produisent des impulsions de bruit microphonique à partir desdits détecteurs de neutrons, et dans lequel les sorties desdits au moins deux détecteurs de neutrons sont reliées à des entrées négative et positive respectives d'un amplificateur différentiel, dans lequel l'agencement comporte de plus :
des premiers et seconds moyens comparateurs connectés à la sortie dudit amplificateur différentiel pour produire des première et seconde impulsions de sortie sensibles à des impulsions appliquées auxdits entrées négative et positive dudit amplificateur différentiel qui sont respectivement supérieures à des niveaux d'amplitude prédéterminés ou plus négatives que ceux-ci,
des moyens sensibles auxdites première et second impulsions de sortie pour mesurer les durées desdites première et seconde impulsions de sortie, et
des moyens pour compter lesdites première et seconde impulsions de sortie respectives en tant que décomptes de neutrons uniquement si leurs durées respectives sont inférieures à une durée prédéterminée.

5. Agencement selon la revendication 4, dans lequel ladite durée prédéterminée est établie à une valeur inférieure à 10 microsecondes.

6. Agencement selon la revendication 4 ou 5, comportant de plus des moyens pour rejeter à la fois les première et seconde impulsions de sortie en tant que décomptes de neutrons si lesdites première et seconde impulsions de sortie respectives se chevauchent dans le temps.

7. Procédé pour éliminer des impulsions induites par choc à partir d'une séquence d'impulsions induites par rayonnement dans le décompte d'impulsions depuis un détecteur de neutrons, le procédé comportant les étapes consistant à :
mesurer la durée d'impulsions de sortie provenant dudit détecteur de neutrons, et
compter lesdites impulsions de sortie en tant qu'impulsions induites par neutrons uniquement si la longueur d'une impulsion de sortie est inférieure à une durée prédéterminée.

8. Procédé selon la revendication 7, comportant de plus l'étape consistant à modifier un signal non-traité provenant dudit détecteur de neutrons pour produire une impulsion de sortie uniquement si ledit signal non-traité est supérieur en amplitude à un niveau prédéterminé.

9. Procédé pour éliminer des impulsions induites par choc à partir d'une séquence d'impulsions induites par rayonnement tout en comptant les impulsions provenant d'un détecteur de neutrons, le procédé comportant les étapes consistant à :
agencer un ensemble de détection de neutrons dans un outil de diagraphie pendant un forage incluant au moins deux détecteurs de neutrons au niveau d'une position axiale commune dudit outil avec chaque détecteur produisant des impulsions en réponse à un rayonnement revenant vers ledit outil depuis des formations entourant un trou de sondage, ledit outil étant soumis à des forces qui produisent des impulsions de bruit microphonique dans la sortie desdits détecteurs de neutrons,
appliquer les sorties desdits au moins deux détecteurs de neutrons à des entrées respectives négative et positive d'un amplificateur différentiel,
fournir des premiers et seconds moyens comparateurs connectés à la sortie dudit amplificateur différentiel pour produire des première et seconde impulsions de sortie sensibles à des impulsions appliquées auxdites entrées négative et positive dudit amplificateur différentiel qui sont respectivement supérieures à des niveaux d'amplitude prédéterminés, ou qui sont plus négatives que ceux-ci,
mesurer les durées desdites première et seconde impulsions de sortie, et
compter lesdites première et seconde impulsions de sortie respectives en tant que décomptes de neutrons uniquement si leurs durées respectives sont inférieures à une durée prédéterminée.

10. Procédé selon la revendication 9, comportant de plus l'étape consistant à rejeter à la fois les première et seconde impulsions de sortie en tant que décomptes de neutrons si les première et seconde impulsions de sortie respectives se chevauchent dans le temps.
